(19) **Europäisches Patentamt**
**European Patent Office**
**Office européen des brevets**

(11) **EP 2 942 652 B1**

(12) **EUROPEAN PATENT SPECIFICATION**

(45) Date of publication and mention
of the grant of the patent:
**10.10.2018 Bulletin 2018/41**

(51) Int Cl.:
***G02B 6/12*** *(2006.01)*     ***G02B 6/122*** *(2006.01)*
***G02B 6/136*** *(2006.01)*

(21) Application number: **14175029.9**

(22) Date of filing: **30.06.2014**

(54) **Layer having a non-linear taper and method of fabrication**

Abgeschrägte Schicht mit nichtlinearer Dickenänderung und Herstellungsverfahren

Couche à raccord présentant un effilement non linéaire et procédé de fabrication

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.05.2014 US 201414270014**

(43) Date of publication of application:
**11.11.2015 Bulletin 2015/46**

(73) Proprietor: **LioniX International B.V.**
**7500 AL Enschede (NL)**

(72) Inventors:
• **Heideman, Rene Gerrit**
**7572 TK Oldenzaal (NL)**

• **Hoekman, Marcel**
**7511 ME Enschede (NL)**

(74) Representative: **Williams, David John**
**Page White & Farrer**
**Bedford House**
**John Street**
**London**
**WC1N 2BF (GB)**

(56) References cited:
**EP-A1- 0 546 961**     **EP-A2- 2 720 073**
**WO-A1-2009/051562**     **JP-B2- 3 112 115**
**US-A- 4 865 407**     **US-A1- 2002 191 916**
**US-A1- 2008 264 107**     **US-B1- 8 718 432**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Field of the Invention**

The present invention relates to guided-wave optics in general, and, more particularly, to planar lightwave circuits.

**Background of the Invention**

A surface waveguide is a light pipe that is formed on a surface of a substrate. Surface waveguides are operative for guiding light signals along paths that can include curves, loops, etc. without a significant loss of optical energy. Typically, a surface waveguide includes a central core of substantially transparent material that is surrounded by cladding material whose refractive index that is lower than that of the core material. This refractive index difference gives rise to most of the optical energy of the signal being contained within the surface waveguide core.

Surface waveguides are typically formed on rigid substrates, such as glass or silicon. Often, multiple surface waveguides are formed on a single substrate to collectively define a planar lightwave circuit (PLC). Surface waveguides can be configured to define complex structures, such as ring resonators, 1xN couplers and splitters (where N can be 2, 3, or more), and the like, which are difficult to realize using conventional optical fibers.

The "mode" of the light signal propagates primarily within the core, although a portion (commonly referred to as the "evanescent field") extends into the cladding. The shape of the mode and the size of the evanescent field depend strongly on the design of the surface waveguide. Factors such as surface-waveguide design (*i.e.*, cross-sectional shape), index contrast (*i.e.*, the effective refractive-index difference between the core and cladding), core size, and cladding thickness all impact how strongly optical energy is confined in the core, as well as the shape and size of the optical mode (*I.e.,* mode profile and mode-field size).

In surface waveguides having only a small difference between the refractive indices (or effective refractive indices) of the core and cladding material (referred to herein as "low-contrast waveguides"), light is loosely confined in the core and the evanescent field is relatively large. The optical propagation loss of such surface waveguides can be very low; therefore, low-contrast waveguides are preferred in applications where low propagation loss is critical, such as for transmission in optical telecom or datacom systems.

Low-contrast waveguides typically exhibit optical propagation loss that is somewhat higher than that of a typical communications-grade optical fibers, but can also enable low-loss surface waveguide crossings, optical power splitting, and optical power coupling, which are difficult to achieve using optical fibers. Unfortunately, because they only loosely confine light signals, low-contrast waveguides are susceptible to severe losses at surface waveguide bends, as well as disruption from optical signals propagating in other low-contrast waveguides located nearby. Low-contrast waveguides, therefore, require large bending radii and are not well suited for use in high-density PLCs. As a result, low-contrast waveguide systems require a large chip area, which increases their cost. It is possible to design a low-contrast waveguide having a propagation mode that substantially matches the mode profile and mode-field size of an optical fiber, however. This can reduce optical loss that arises when a light signal is transferred between the surface waveguide and the optical fiber. They are attractive, therefore, for combined systems where a low-contrast waveguide is optically coupled with an optical fiber to add functionality to a low-loss optical system.

A surface waveguide having a large difference between the refractive indices (or effective refractive indices) of their core and cladding materials (referred to herein as a "high-contrast waveguide") tightly confines a light signal in its core such that the evanescent field is relatively small. This enables high-contrast waveguides to have extremely small bending radii. High-contrast waveguides can also be located quite close to other high-contrast waveguides without incurring significant signal interference or degradation. As a result, high-contrast waveguides enable complex circuit functionality in a relatively small chip area and are well suited to large-scale integration PLCs having densely packed surface waveguides.

Unfortunately, high-contrast waveguides typically have relatively higher optical propagation loss. Their use, therefore, has historically been limited to applications in which functionality is more important than low loss, such as sensors, power splitters, and the like. In addition, the mode profile of a high-contrast waveguide is not well matched to that of an optical fiber; therefore, the optical loss that arises when a light signal is transferred between a high-contrast waveguide and an optical fiber is typically quite large. As a result, high-contrast waveguides are not well suited for combined systems where a high-contrast waveguide is optically coupled with an optical fiber.

In some cases, it is desirable to have both high-contrast waveguides and low-contrast waveguides in the same PLC. One way to enable this is through the use of a spotsize converter, sometimes referred to as a mode-field converter. In addition, a spotsize converter can enable the use of a high-contrast waveguide-based PLC with a conventional optical fiber by changing the mode profile of the high-contrast waveguide at its input and/or output to more closely match that of the optical fiber, thereby reducing fiber-to-chip coupling loss.

Attempts to form PLC-based spotsize converters in the prior art have typically relied on surface waveguide regions comprising a one-dimensional taper in the lateral dimension, wherein the lateral taper is formed using conventional photolithography and etching. Examples of such devices are described in "Optical spotsize converter using narrow laterally tapered surface waveguide for Planar Lightwave Circuits," J. Lightwave Tech., Vol. 22, pp. 833-839 (2004). While some improvement in coupling performance is achieved with this approach, the performance and flexibility of these devices is limited because the mode-field is only controlled in one dimension.

Silicon-core surface waveguides having tapered cores have also been investigated in the prior art, such as is described in "Spotsize converters for rib-type silicon photonic wire surface waveguides," Proceedings of the 5th International Conference on Group IV Photonics, Sorrento, Italy, Sept. 17-19, pp. 200-202 (2008) and "Low loss shallow-ridge silicon surface waveguides," Optics Express, Vol. 18, No. 14, pp. 14474-14479 (2010). Unfortunately, while the promise of compatibility with conventional integrated circuits is attractive, the operating wavelengths and propagation losses for silicon-core surface waveguides limit their use in many applications.

In similar fashion, optical coupling between an optical fiber and a photonic crystal surface waveguide via a laterally tapered silicon-wire surface waveguide region was demonstrated in "Spotsize converter of Photonic Crystal Surface waveguide," NTT Technical Review, Vol. 2, pp. 36-47 (2004).

Of more promise, however, are mode-field conversion regions formed in surface waveguides that are tapered in two dimensions, such as described in " Low-Loss Compact Arrayed Surface waveguide Grating with Spot-size Converter Fabricated by a Shadow-Mask Etching Technique," Electronics and Telecommunications Research Institute (ETRI) Journal, Vol. 27, No. 1, pp. 89-94 (2005). While the structure of these spotsize converters shows great promise for low fiber-to-chip coupling losses, shadow-mask etching is extremely difficult to control. As a result, spotsize converters fabricated in this manner are expensive to produce in volume and are likely to suffer from variations in performance as well, making them difficult, at best, to commercialize.

US8718432 discloses a spotsize converter than includes a low-index-contrast waveguide region in which a light signal has a first mode-field profile and a high-index-contrast waveguide region in which the light signal has a second mode-field profile, where the low- and high-index waveguides are optically coupled by a transition region in which the mode-field profile of the light signal is converted between the first and second mode-field profiles. Several variations of tapered profiles are disclosed.

EP0546961 discloses a hybrid optical waveguide structure that includes a hybrid coupler, where the hybrid coupler comprises a non-linearly tapered film disposed above a diffraction grating. The non-linear taper in the tapered film is formed by shadowed deposition or dip-coating.

EP2720073 discloses a spotsize converter having a linearly tapered transition region as well as a method comprising:

providing a substrate having a first region, second region, and third region that is between the first region and second region, wherein the third region abuts the first region at a first point along a first axis, and wherein the third region abuts the second region at a second point along the first axis; and

providing a first layer of a first material disposed on the substrate, wherein the first layer has a first thickness in the first region and a second thickness in the second region, and wherein the thickness of the first layer in the third region may change in non-linear fashion from the first thickness at the first point to the second thickness at the second point, and wherein the first layer is provided by operations comprising:

(i) forming the first layer with a first surface and a thickness equal to the second thickness;
(ii) forming an accelerator layer on the top surface of the first layer, the accelerator layer comprising a second material;
(iii) forming a mask layer on the second surface,
(iv) etching the first layer and the accelerator layer in a first etchant for a first time period, the first etchant being selected such that it etches the second material at a faster rate than the first material,

wherein the first time period is selected based on the etch rate of the first material, the first thickness, and the distance between the first point and the second point.

US2002191916 discloses vertically tapered optical coupler for optically coupling low-index-contrast optical fibers with high-index-contrast optical fibers. Frish discloses non-linear tapers formed by oxidizing a silicon layer and then selectively removing the oxidized region.

WO2009051562 discloses an optical coupler for coupling a single-mode fiber with a light source, where the optical coupler includes a tapered region whose thickness varies non-linearly along its length. This document is notably silent with how the non-linear thickness taper is formed.

US4865407 discloses an optical waveguide having an optical coupling region whose thickness varies non-linearly along its length. The thickness variation of the optical coupling region is derived by depositing its constituent material using a shadow mask. In some embodiments, the substrate is moved relative to the shadow mask during deposition to effect a graded thickness. In some embodiments, the shadow mask is formed such that it has a pattern of narrow slits through which the material is deposited, where the slit spacing is varied to effect a graded thickness of deposited material.

US2008264107 discloses an optical waveguide having a core layer comprising silver ions whose positions within the body of a substrate are controlled by the application of an electric field. A nonlinear thickness core layer is formed by applying a curved "wedge" layer between the substrate and an electrode to give rise to a nonlinearly varying electric field along the length of the waveguide.

JP 3112115 discloses a method for forming a tapered-thickness waveguide using wet etching; however, it does not disclose the use of a mask layer having a non-linearly shaped opening.

An improved method forming low-cost, commercially viable spotsize converters that are operable over a wide range of wavelengths would, therefore, be highly desirable.

## Summary of the Invention

The present invention enables a surface waveguide-based spotsize converter having a mode-transition region that has a non-linear thickness profile, wherein the mode-transition region is shaped via a simple and controllable tapering technique that is commercially viable. Embodiments of the present invention are well suited for use in low-loss fiber-to-chip couplers, stand-alone spotsize converters, and fiber-to-fiber optical couplers, as well as for use within a PLC to adiabatically couple surface waveguide regions having different index contrast.

In one aspect the invention provides a method according to claim 1.

A spotsize converter as described comprises a first region having a first mode-field size, a second region having a second mode-field size, and a mode-transition region that optically couples the first and second region, wherein the transition region is tapered in the vertical dimension such that the thickness of at least one of its constituent layers changes monotonically along the length between the first and second regions.

There is described an example in which a tapered transition region is formed via an accelerator layer that etches laterally in an etchant. The accelerator layer is disposed on a surface of an underlying first layer, whose material is also etched by the etchant. A mask layer is formed on the top surface of the accelerator layer, wherein the mask includes a shaped region and a field region that are aligned along a first axis. The shaped region includes opposing sides that meet at an initial point on the first axis and move away from the

first axis in non-linear fashion as a function of distance along the first axis. When exposed to the etchant, a lateral etch front proceeds normally inward from each point on the sides, undercutting the mask layer in the shaped region. As the lateral etch front proceeds under the mask layer, an increasing amount of the surface of the first layer is exposed to the etchant. This results in a thickness change in the first layer that varies as a function of distance from the sides, as well as the distance along the first axis. The thickness profile is controlled by controlling the relative etch rates of the materials of the accelerator layer and the first layer in the etchant, as well as the shape of the sides.

There is described an example which comprises a ridge waveguide having a first region, second region, and third region that is between the first region and second region. The surface waveguide comprises a core of silicon nitride that surrounded by silicon dioxide. The core has a thickness in the first region that is approximately 65 nanometers (nm). The core has a thickness in the second region that is approximately 220 nm. The thickness of the core in the third region changes in substantially sinusoidal fashion from 65 nm where it meets the first region to 220 nm where the outer core meets the second region. The width of the core also changes along the length of the third region from a width of approximately 65 nm wherein the third region abuts the first region to a width of approximately 1 micron where the third region abuts the second region. In some embodiments, the width also changes substantially sinusoidally in the third region. In some embodiments, the width of the core remains substantially uniform through all three regions.

There is described a method comprising: providing a first layer of a first material, wherein the first material etches at a first etch rate in a first etchant; providing an accelerator layer disposed on the first layer, the accelerator layer comprising a second material, wherein the second material etches at a second etch rate in the first etchant; providing a mask layer that is disposed on the accelerator layer, the mask layer comprising a field region and a shaped region that abuts the field region at a first end and extends from the field region along a first axis to a tip, the shaped region having opposing first and second sides that meet at the tip, wherein the first and second sides collectively define a first width that increases nonlinearly from the tip to the first end; laterally etching the accelerator layer in the first etchant such that the shaped region is undercut along directions normal to each point on the first side and second side; and etching the first layer in the first region in the first etchant such that the thickness of the first layer increases nonlinearly from the tip to the first end.

There is described a composition comprising: a first layer having a first region, second region, and third region that is between the first region and second region, wherein the third region abuts the first region at a first point along a first axis, and wherein the third region abuts the second region at a second point along the first axis; wherein the first layer has a first thickness in the first region, a second thickness in the second region, and a thickness in the third region that changes in non-linear fashion between the first point and the second point.

**Brief Description of the Drawings**

FIG. 1 depicts a schematic drawing of a side view of a ramp formed via an exemplary accelerator-layer tapering process.

FIGS. 2A-C depict schematic drawings of side views of a substrate region comprising a tapered region at different points during an exemplary accelerator-layer tapering process.

FIG. 3 depicts operations of an exemplary one-dimensional accelerator-layer tapering process.

FIGS. 4A and 4B depict schematic drawings of top and side views, respectively, of a surface waveguide core of a spotsize converter having a double-angle taper thickness profile.

FIG. 5A depicts a plot of taper profile for an exemplary spotsize converter having a double-angle taper region.

FIG. 5B depicts a plot of mode-profile angles induced by an exemplary double-angle taper region.

FIG. 5C depicts a plot of mode-profile angles induced by an exemplary single-angle taper region.

FIGS. 6A-B depict schematic drawings of side and top views, respectively, of a spotsize converter having a substantially sinusoidally tapered core layer in accordance with an illustrative embodiment of the present invention.

FIG. 7 depicts operations of a method suitable for forming a spotsize converter in accordance with the illustrative embodiment.

FIGS. 8A-D depict schematic drawings of views of spotsize converter **600** at different points in its fabrication.

FIG. 9 depicts operations of a method suitable for determining the shape of opening **810** in accordance with the illustrative embodiment of the present invention.

FIGS. 10A-B depict plots of the magnitude of etch-front angle $\Phi$ as a function of distance, z, for taper regions having lengths of 2 mm and 1 mm, respectively.

FIGS. 11A-B depict plots of the thickness of exemplary core layers **610** as a function of distance, z, for taper regions having lengths of 2 mm and 1 mm, respectively.

FIGS. 11C-D depict plots of the taper angle, $\theta$, of exemplary core layers **610** as a function of distance, z, for taper regions having lengths of 2 mm and 1 mm, respectively.

FIGS. 12A and 12B depict plots of a mode profile induced by exemplary sinusoidal taper regions having lengths of approximately 2 mm and 1 mm, respectively.

**Detailed Description**

The following terms are defined for use in this Specification, including the appended claims:

- **Disposed on** or **Formed on** is defined as "exists on" an underlying material or layer. A first layer can be disposed on a second layer with intermediate layers, such as transitional layers, separating the first layer and second layer. For example, if a material is described to be "disposed (or grown) on a substrate," this can mean that either (1) the material is in intimate contact with the substrate; or (2) the material is in contact with one or more intermediate layers that reside on the substrate.

- **Monotonically** is defined as only increasing or decreasing. In other words, the first derivative of a monotonically changing function never changes sign. For example, a layer whose thickness increases monotonically along a first direction has a thickness that never decreases along the first direction. It should be noted that the thickness of a layer can change in either a linear or non-linear fashion and still be considered to be changing monotonically.

- **Low-contrast region** is defined as a region of a planar-lightwave circuit comprising one or more low-contrast waveguides.

- **High-contrast region** is defined as a region of a planar-lightwave circuit comprising one or more high-contrast waveguides.

As discussed in U.S. Patent Application Serial No. 13/451,957 (*i.e.*, the *parent application*), the design parameters of a surface waveguide (*i.e.,* cross-sectional shape, core size, core and cladding materials, index contrast, cladding thickness, etc. dictate the mode propagation characteristics of the surface waveguide. (*i.e.*, mode profile, mode-field size, mode confinement, *etc.*). As a result, a spot-size converter can be formed by changing one or more of these parameters along a transition region within a surface waveguide such that the mode propagation characteristics (*e.g.*, mode profile, mode-field size, *etc.*) of the surface waveguide can be converted from one configuration to another.

Prior-art spot-size converters, and the methods by which they are made, have several drawbacks, however. For example, prior-art fabrication methods are very difficult to control and reproduce and, therefore, are not well suited for high-volume commercial use. Still further, these methods are limited to formation of only substantially linear taper regions.

In addition, the length of the transition region in a prior-art spotsize converter is often limited by the methods used to form it. Taper length is an important parameter for achieving adiabatic mode-conversion; therefore, this constrains the range of design for surface waveguides included in prior-art spotsize converters.

The parent application, however, disclosed an accelerator-layer tapering method suitable for forming one- or two-dimensional taper regions in a material layer. Before describing the present invention, it will be instructive to provide a brief example of the formation of a linear ramp (*i.e.,* a one-dimensional taper) using accelerator-layer tapering. Additional details regarding the accelerator-layer tapering method, for both 1D and 2D structures, can be found in the *parent application.*

*Accelerator-layer Tapering Process*

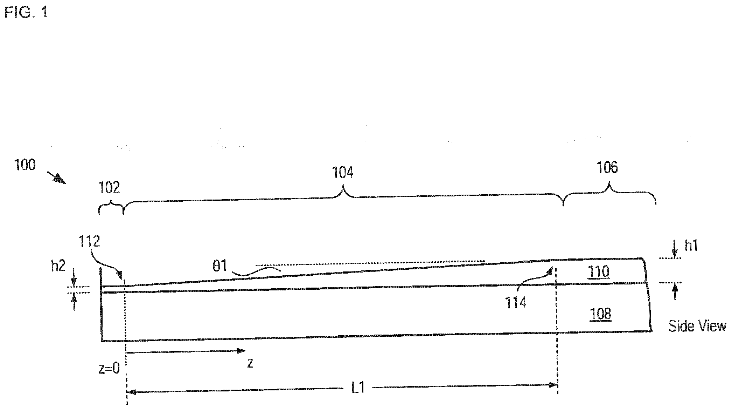

FIG. 1 depicts a schematic drawing of a side view of a ramp formed via an exemplary accelerator-layer tapering process. Substrate region **100** includes regions **102, 104,** and **106,** each of which includes substrate **108** and layer **110.** Region **104** extends from first end **112,** where it abuts region **102,** to second end **114,** where it abuts region **106.**

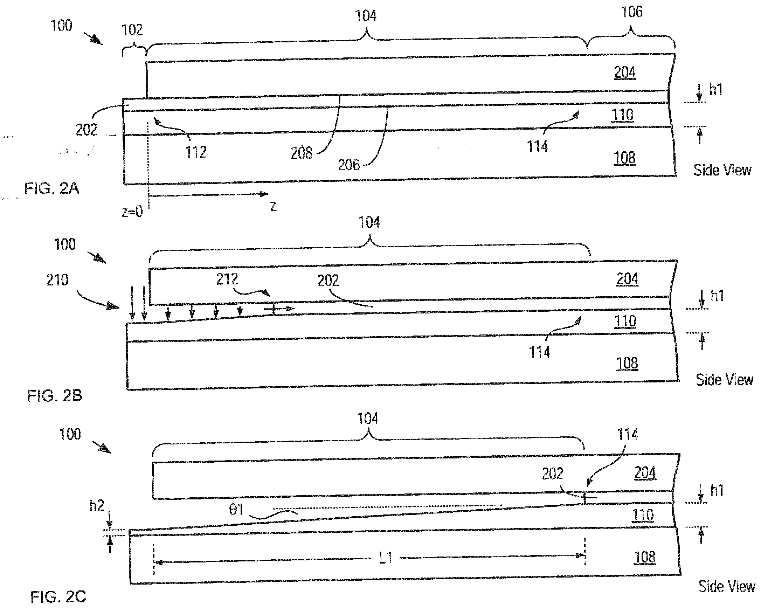

FIGS. 2A-C depict schematic drawings of side views of a substrate region comprising a tapered region at different points during an exemplary accelerator-layer tapering process.

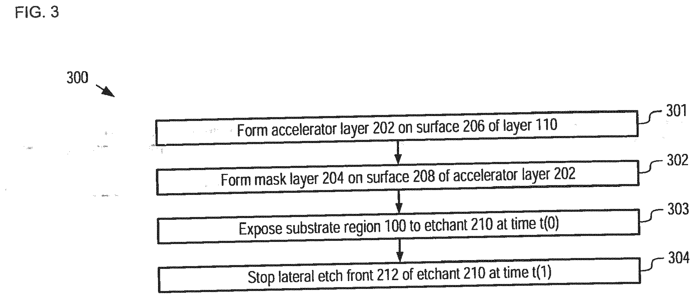

FIG. 3 depicts operations of an exemplary one-dimensional accelerator-layer tapering process. FIG. 3 is described with continuing reference to FIGS. 1 and 2A-C.

Method **300** begins with operation **301,** wherein accelerator layer **202** is formed on surface **206** of layer **110.** Layer **110** is a planar layer of stoichiometric silicon nitride having a thickness, **h1.**

Although layer **110** comprises silicon nitride in this example, it will be clear to one skilled in the art, after reading this Specification, that the accelerator-layer tapering process is suitable for tapering any layer of material whose structure does not inhibit substantially uniform etch rate in all dimensions. Materials for which an accelerator-layer tapering process is suitable include, without limitation, dielectrics, silicon oxides, glasses, plastics, ceramics, silicon, polysilicon, amorphous silicon, amorphous and polycrystalline silicon-containing compounds (*e.g.*, silicon carbide, *etc.*), crystalline III-V compound semiconductors, polycrystalline III-V compound semiconductors, amorphous III-V compound semiconductors, crystalline II-VI compound semiconductors, polycrystalline II-VI compound semiconductors, amorphous II-VI compound semiconductors, metals, and composite materials.

Accelerator layer **202** comprises a sacrificial material that etches in a first etchant that also etches the material of layer **110.** Typically, the material of accelerator layer **202** is selected such that it etches at a faster rate in the first etchant than the material of layer **110.** One skilled in the art will recognize that the material of accelerator layer **202** is a matter of design choice and will depend on the material of layer **110** and available etchants.

At operation **302,** mask layer **204** is formed and patterned on accelerator layer **202.** Mask layer **204** is patterned to expose surface **208** of accelerator layer **202** in region **102,** but initially protect surface 208 in regions **104** and **106.** The edge of mask layer **204** is located at first end **112** (*i.e.*, at z=0).

FIG. 2A depicts a cross-sectional view of substrate region **100** after the formation of mask layer **204** on accelerator layer **202.**

At operation **303,** substrate region **100** is exposed to etchant **210** at time t(0).

Etchant **210** comprises a chemical (*e.g.*, nitric acid, *etc*.) that etches the material of accelerator layer **202** at a faster rate than the material of layer **110**. As a result, accelerator layer **202** is removed quickly in region **102** and etchant **210** begins to attack underlying layer **110** uniformly across the region. At the same time, etchant **210** begins to etch accelerator layer **202** laterally along the z-direction from first end **112** toward second end **114,** undercutting mask layer **204** along the z-direction. In some embodiments, accelerator layer **202** is removed from region **102** via a different etch (preferably, a directional etch) that removes its material selectively over the material of layer **110**. This ensures a clean starting condition at first end **112** for the lateral etching of accelerator layer **202 in** region **104**. It can also improve the uniformity of the vertical etching of layer **110** in region **102**.

FIG. 2B depicts a cross-sectional view of substrate region **100** during operation **303**.

Etch front **212** moves along the z-direction at a substantially constant velocity, thus exposing a linearly increasing amount of surface **206**.

At operation **304,** the etching of layer **110** by etchant **210** is stopped at time t(1). Time t(1) is selected based on the etch rate of the material of layer **110** in etchant **210,** initial thickness, **h1,** final thickness, **h2,** and the desired length, **L1,** of taper region **104**.

Second end **114** is defined by the point at which etch front **212** is stopped in operation **204**. As a result, no etching of layer **110** occurs at second end **114** (or beyond it in region **106**) because etchant **210** has no time to attack layer **110** at surface **206**. At second end **114** and in region **106,** therefore, layer **110** remains at its deposited thickness, **hi**. At first end **112** and in region **102,** however, etchant **210** etches layer **110** for substantially the entire time period from t(0) to t(1), resulting in final thickness, **h2,** for layer **110**. Between first end **112** and second end **114,** the exposure time of layer **110** in etchant **210** is a linearly decreasing function of distance along the z-direction from first end **112**. Etchant **210,** therefore, creates a linearly increasing thickness of layer **110** (from **h2** to **hi)** from first end **112** to second end **114**. It should be noted that the magnitude of the taper angle, $\theta1,$ is dependent upon the relative etch rates of the materials of accelerator layer **202** and layer **110** in etchant **210**. The relationship between $\theta1$ and these etch rates can be described as:

$$\theta1 = \arctan\left(\frac{ER1}{ER2}\right), \qquad (1)$$

where ER1 is the etch rate of the material of layer **110** and ER2 is the lateral etch rate of accelerator layer **202** in etchant **210**.

One skilled in the art will recognize that the density of the materials used in accelerator layer **202** and layer **110** impact their respective etch rates in an etchant. As a result, each etch rate can vary for the same material depending on how that material was formed (*e.g.*, deposition temperature, annealing temperature, annealing time, *etc.*).

FIG. 2C depicts a cross-sectional view of substrate region **100** after operation **304**.

As further discussed in the parent application, accelerator-layer tapering can be implemented so as to form regions having tapers that are mutually non-orthogonal (*e.g.*, a beveled region or wedge), as well as, by judicious design of mask features, taper regions having non-linear tapers.

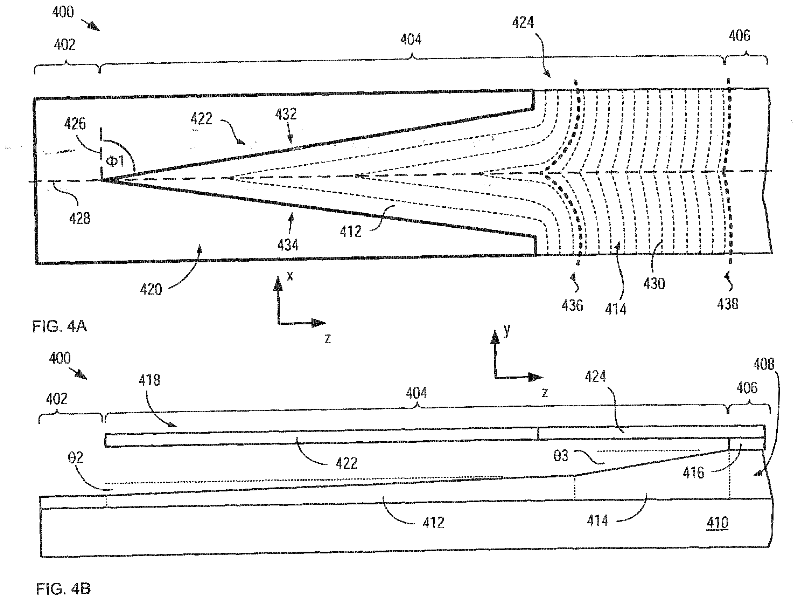

FIGS. 4A and 4B depict schematic drawings of top and side views, respectively, of a surface waveguide core of a spotsize converter having a double-angle taper thickness profile. Surface waveguide core **400** comprises low-contrast region **402,** taper region **404,** and high-contrast region **406**. Low-contrast region **402,** taper region **404,** and high-contrast region **406** are formed in core layer **408** using accelerator-layer tapering, as described above. Core layer **408** is disposed on conventional lower cladding **410**.

Taper region **404** includes first taper region **412** and second taper region **414,** each of which has a different taper angle. In each of low-contrast region **402** and high-contrast region **406,** surface waveguide core **400** is a ridge of stoichiometric silicon nitride having a substantially rectangular cross-sectional shape having a thickness that is typically within the range of a few nm to approximately 300 nm and a width that is typically within the range of a few nm to tens of microns. In some embodiments, core **400** has a different shape, such as square, irregular (*e.g.,* a "u" shape, "T" shape, *etc.*). FIG. 4 depicts surface waveguide core **400** after its thickness has been tapered but prior to the removal of mask layer **418** and accelerator layer **416**. Waveguide core **400** is also depicted prior to its lateral definition.

In forming surface waveguide core **400,** mask layer **418** is first formed on the surface of accelerator layer **416** and patterned to define opening **420,** wedge **422,** and field region **424**. Opening **420** defines low-contrast region **402**. Each of the sides of wedge **422** form angle $\Phi1$ relative to line **426** and $\Phi2$ relative to propagation axis **428**. Line **426** is a line normal to optical propagation axis **428,** as shown. Field region **424** protects second taper region **414** and high-contrast region **406** in the same manner as is described above and with respect to one-dimensional accelerator-layer tapering.

Wedge **422** protects core layer **408** and accelerator layer **416** from vertical attack during the taper etch that forms taper region **404;** however, accelerator layer **416** enables accelerator-layer etching of the core layer to proceed along three directions - the z-direction, direction **432,** and direction **434,** as shown. As a result, accelerator layer **416** is etched laterally at a faster rate in first taper region **412** than in second taper region **414,** resulting in a more gradual tapering of core layer **408** in first taper region **412** than in second taper region **414.** Iso-height profiles **430** indicate vertical height changes of 10 nm. The more gradual height change in first taper region **412** defines a substantially linear slope having an angle θ**2** with respect to the original top surface of core layer **408,** while the more rapid height change in second taper region **414** defines a substantially linear slope having an angle θ**3** with respect to the original top surface of core layer **408.** Boundary **436** denotes an approximate transition between first taper region **412** and second taper region **414.** Boundary **438** denotes an approximate transition between second taper region **414** and high-contrast region **406.**

The value of θ**3** depend on the relative etch rates of accelerator layer **416** and core layer **408,** as described above and with respect to θ1 of FIG. 2C. The values **of** θ**2** and θ**3,** however, are also dependent upon angle Φ1 of wedge **422,** as follows:

$$\theta_2 = \arctan\left(\frac{ER1}{ER2} \cdot \cos(\Phi 1)\right), \tag{2}$$

$$\theta_3 = \arctan\left(\frac{ER1}{ER2}\right). \tag{3}$$

It can be seen from this equation that the magnitude of angle θ**2** is inversely dependent on wedge angle Φ**1**.

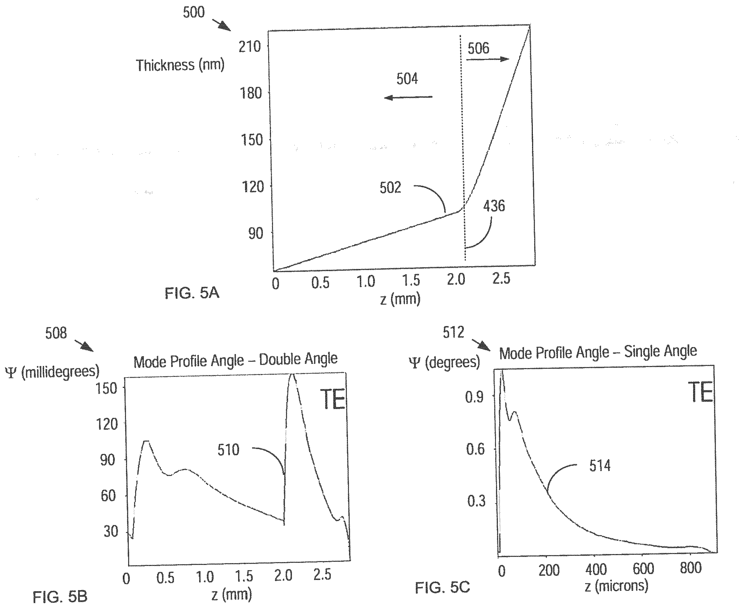

FIG. 5A depicts a plot of taper profile for an exemplary spotsize converter having a double-angle taper region. Plot **500** shows the thickness of a taper region of a core layer formed using a wedge **422** having angle Φ**1** of approximately 85°. As cos(85°) is approximately 1/10, the angles θ2 and θ3 have this ratio. -. In taper region **412,** taper angle θ**2** is approximately 0.001°, while in taper region **414,** taper angle θ**3** is approximately 0.010°. Boundary **436** denotes the approximate transition between angles θ**2** and θ**3**.

FIGS. 5B and 5C depict plots of a mode profile angles induced by an exemplary double-angle taper region and a single-angle linear taper region, respectively.

Plot **508** shows the mode profile angle, Ψ, induced by the taper angle of a double-angle linear taper having taper angles θ**2** and θ**3** of 0.001° and 0.010°, respectively for TE polarized light at 1550 nm. For comparison, plot **512** shows the mode profile angle, Ψ, induced by the taper angle of a simple linear taper for TE polarized light at 1550 nm. A comparison of plots **508** and **512** shows that the angle of the mode profile induced by the double-angle taper region is improved over that of the simple linear taper region.

As disclosed in the *parent application,* the techniques used to define the double-angle taper described above can also be used to define a taper having a non-linear, relatively complex vertical profile, such as a ramp having a steadily curving or substantially sinusoidal profile. Such layers can be advantageously used in the core and/or cladding layers of a transition region of a spot-size converter, as they can facilitate an adiabatic transition from one guided-mode profile to another.

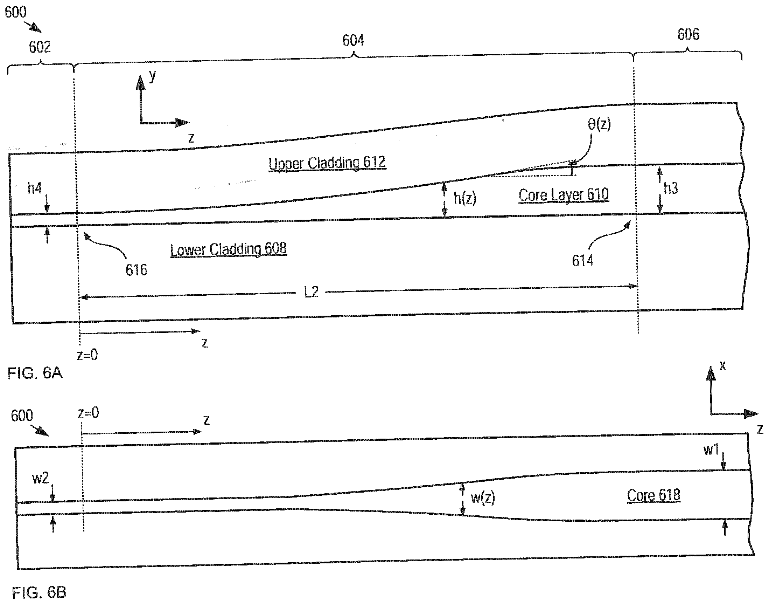

FIGS. 6A-B depict schematic drawings of side and top views, respectively, of a spotsize converter having a substantially sinusoidally tapered core layer in accordance with an illustrative embodiment of the present invention. Spotsize converter **600** comprises low-contrast region **602,** taper region **604,** and high-contrast region **606.** In each of these regions, spotsize converter **600** includes a waveguide structure comprising lower cladding **608,** core layer **610,** and upper cladding **612.** The thickness of core layer **610** varies, from h3 at first end **614** to **h4** at second end **616,** as a substantially sinusoidal function of position along the z-direction within taper region **604,** as described below.

Low-contrast region **602** and taper region **604** are formed by tapering core layer **608** using accelerator-layer tapering, as described above.

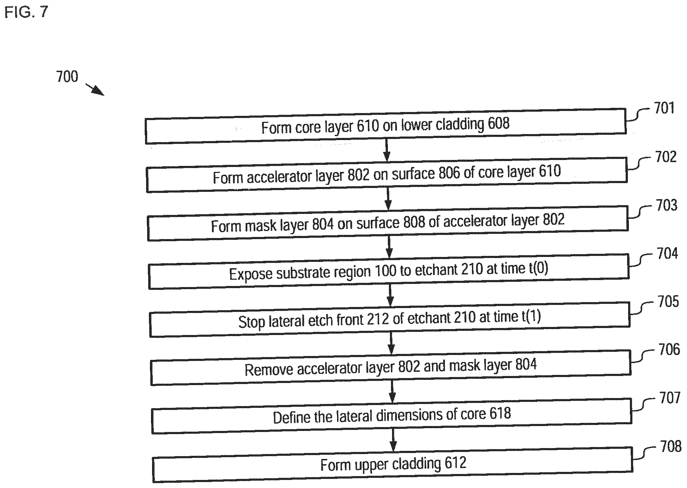

FIG. 7 depicts operations of a method suitable for forming a spotsize converter in accordance with the illustrative embodiment. Method **700** begins with operation **701,** wherein core layer **610** is formed on lower cladding **608.**

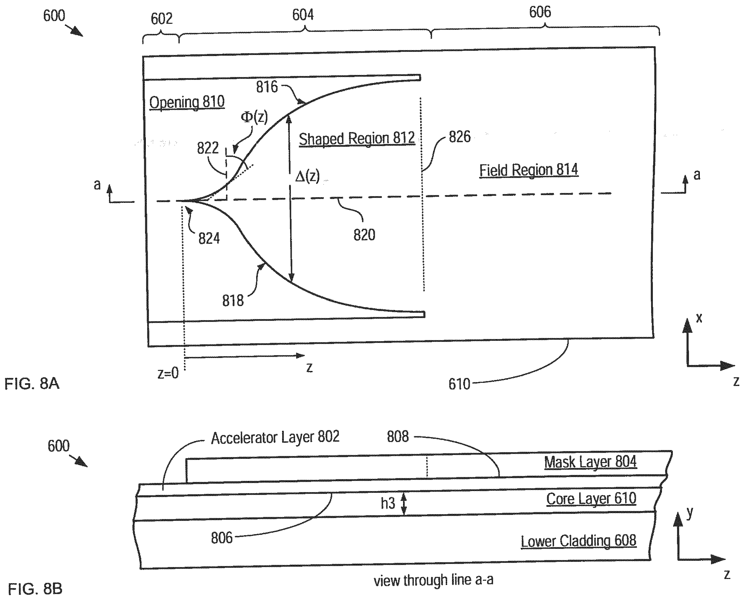

FIGS. 8A-D depict schematic drawings of views of spotsize converter **600** at different points in its fabrication.

Lower cladding **608** is a conventional lower cladding layer having a thickness and refractive index suitable for use with core layer **608.** In the illustrative embodiment, lower cladding **608** is a layer of thermally grown silicon dioxide having a thickness within the range of 5 microns to 50 microns, and preferably 15 microns. It will be clear to one skilled in the art that the material and thickness of lower cladding **608** are matters of design and that any practical thickness and/or material can be used.

Core layer 610 is a layer of stoichiometric silicon nitride having a thickness, **h3,** within the range of approximately 50 nm to approximately 300 nm. In the illustrative embodiment, core layer **610** has a thickness of approximately 220 nm. Typically, core layer **610** is grown on lower cladding **608** using Low-Pressure Chemical Vapor Deposition (LPCVD); however, one skilled in the art will recognize that any suitable method can be used to form core layer **610.**

At operation **702,** accelerator layer **802** is formed on surface **806** of core layer **610.**

At operation **703,** mask layer **804** is formed on surface **808** of accelerator layer **802** and patterned to define opening **810,** shaped region **812,** and field region **814.**

FIGS. 8A-B depict schematic drawings of top and side views, respectively, of nascent spotsize converter **600** after formation of mask layer **804.** FIG. 8B depicts a cross-sectional view through line a-a of FIG. 8A, as indicated.

Opening **810** defines the area of core layer **610** in which low-contrast region **602** is defined. Opening **810** includes sides **816** and **818** that extend from tip **824** to end **826,** where shaped region **812** abuts field region **814.** Sides **816** and **818** define the width, $\Delta(z)$, of shaped region **812,** which typically increases monotonically from tip **824** to end **826.** Each of sides **816** and **818** has a shape that gives rise to a desired thickness taper profile for core layer **610** in transition region **604.** The shape of sides **816** and **818** is calculated from the desired vertical profile of transition region **804.**

At each point along the z-direction, each of sides **816** and **818** forms an instantaneous angle $\Phi$ relative to line **822,** which is a line drawn normal to propagation axis **820** at that point (*i.e.,* the line aligned with the x-direction at the given z, as shown). This instantaneous angle defines the shape of opening **810.**

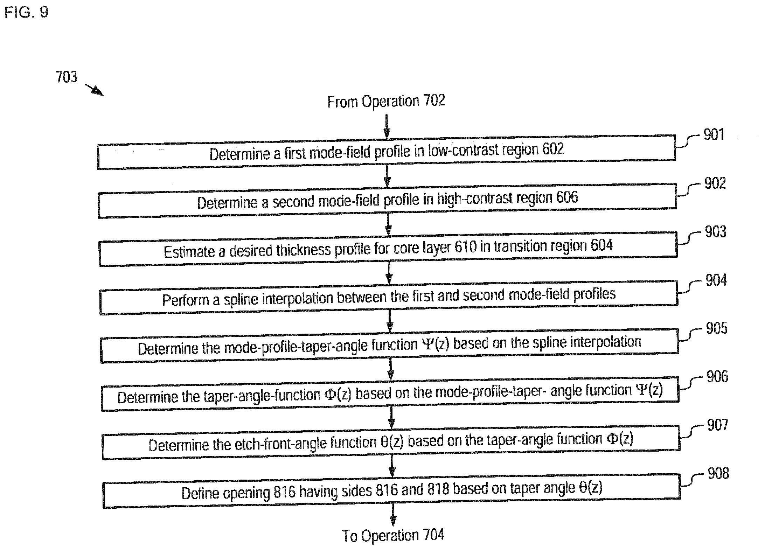

FIG. 9 depicts operations of a method suitable for determining the shape of opening **810** in accordance with the illustrative embodiment of the present invention. Method **900** begins with operation **901,** wherein the desired mode-field profile of a light signal in low-contrast region **602** is determined. It should be noted that the mode-field profile is defined by the mode-field diameters in both the x- and y-directions for each polarization of the light signals (*e.g.,* TE and TM, right- and left-hand circular, *etc.*). One skilled in the art will recognize that the mode-field profile in a surface waveguide is based on several factors, including the materials of the core and cladding of the waveguide, the vertical and lateral dimension (*i.e.,* width) of the waveguide, and the wavelength of the light.

At operation **902,** the desired mode-field profile of the light signal in high-contrast region **606** is determined.

At operation **903,** an estimate of a desired thickness profile, **h(z),** is determined for core layer **610** in transition region **604.** In the illustrative embodiment, the desired thickness profile approximates a sine-bend shape and is described by:

$$ h(z) = \frac{O_{sine}}{L_{sine}} z - \frac{O_{sine}}{2\pi} \sin\left(\frac{2\pi}{L_{sine}} z\right), \qquad (4) $$

where $L_{sine}$ is the length, **L2,** of transition region **604** along the z-direction, and $O_{sine}=$**(h1-h2)/2.** In some embodiments, the desired thickness profile, **h(z),** is other than a sine-bend shape (*e.g.,* an exponential function, *etc.*). Typically, the desired thickness profile in transition region **604** is based on the application for which spotsize converter **600** is intended.

At operation **904,** a spline interpolation is performed to determine a smooth interpolation between the mode-field profiles in the low-contrast and high-contrast regions. The mode-field profile in transition region **604** can be described by a numerical function MFD(h(z)). In some embodiments, MFD(h) is calculated for several intermediate thicknesses along transition region **604** such that the spline interpolation provides an MFD(h) that is a substantially smooth numerical function.

At operation **905,** a mode-profile-angle function $\Psi$**(z)** suitable for generating the result of the spline interpolation is calculated based on MFD(h(z)) and Equations (1) and (2) above, as well as the length, **L2,** of transition region **604.** It should be noted that the mode-profile angle $\Psi$ indicates the rate at which the mode profile changes along the z-direction.

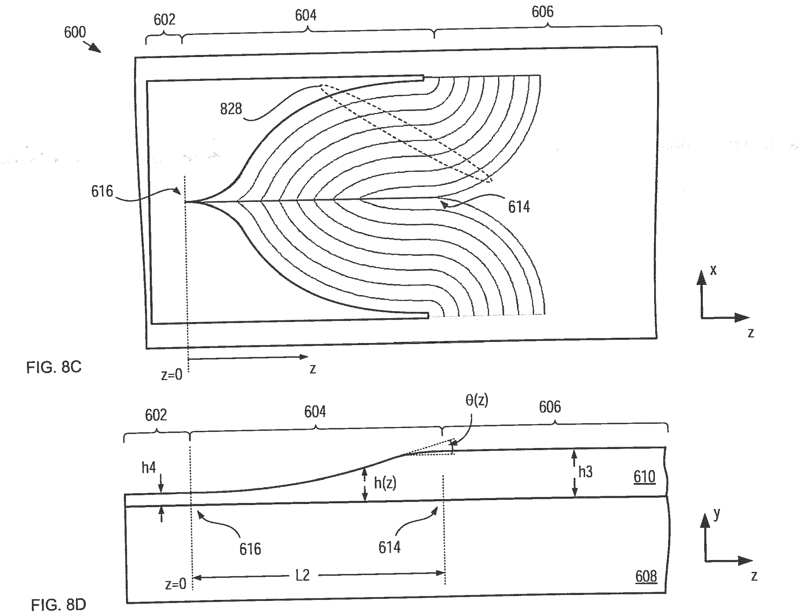

At operation **906,** taper-angle function $\theta$**(z)** is calculated so as to give rise to the desired mode-profile-angle function $\Psi$**(z).** The instantaneous taper-angle $\theta$ is defined as the angle formed, at any given z, between the tangent to the top surface of core layer **610** and a line parallel to a horizontal plane (*e.g.,* the top surface of lower cladding **608,** as shown in FIG. 8D).

At operation **907,** etch-front-angle function $\Phi$**(z)** is defined for each of sides **816** or **818** so as to give rise to taper-angle function $\theta$**(z).** Etch-front-angle function $\Phi$**(z)** dictates the etch-front angle at each point on sides **816** and **818** for each point z along shaped region **812.** For the purposes of this Specification, including the appended claims, the term **"etch-front angle"** is defined as the magnitude of the angle formed between a line drawn normal to the propagation axis at a point z and a line drawn tangent to a side of a shaped region at that z. Etch-front-angle function $\Phi$**(z)** determines the magnitude of the distance between each of sides **816** and **818** and propagation axis **820** (*i.e.,* the width of shaped region **812)** from tip **824** to end **826.**

Finally, at operation **908,** the shape of opening **810** is defined such that sides **816** and **818** are characterized by etch-front-angle function $\Phi$**(z).**

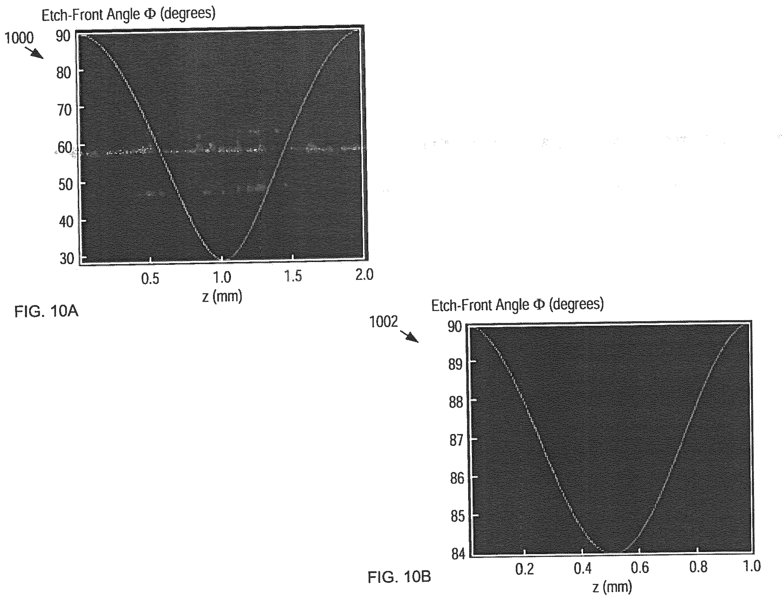

FIGS. 10A-B depict plots of the magnitude of etch-front angle $\Phi$ as a function of distance, z, for taper regions having lengths of 2 mm and 1 mm, respectively.

Returning now to method **700,** at operation **704,** nascent spotsize converter **600** is exposed to a suitable etchant (*e.g.,* etchant **210**) at time t(0). As discussed above and with respect to FIGS. 2A-C, the etchant is selected such that it etches the material of accelerator layer **802** at a faster rate than the material of core layer **610.** As a result, accelerator layer **802** is removed quickly in region **602** and the etchant begins to etch the accelerator layer laterally along the z-direction, as well as along directions normal to sides **816** and **818,** thereby undercutting mask layer **804.**

As the etchant undercuts mask layer **804,** the etch fronts from each exposed edge of shaped region **812** begin to meet. Since the lateral extent of shaped region **812** is a function of z, the duration of the exposure of surface **806** to the etchant is a function of both $\Phi(z)$ and z. As a result, the thickness of core layer **610** in shaped region **812** is based on t, $\Phi(z),$ and z. Along the z-direction, therefore, the profile of core layer **610** can be selected as nearly any desired monotonically increasing function of z, by judicious selection of $\Phi(z).$ In the illustrative embodiment, this profile is substantially a portion of a sinusoid; however, it will be clear to one skilled in the art, after reading this Specification, how to specify, make, and use tapered regions having any suitable substantially monotonically changing vertical profile, including linear, piecewise linear, non-linear, sinusoidal, curved, irregular, and the like.

At operation **705,** the etching of core layer **610** is stopped at time t(1). Time t(1) is selected based on the etch rate of the material of layer **110** in etchant **210,** initial thickness, **h3,** final thickness, **h4,** and the desired length, **L2,** of taper region **604.**

FIGS. 8C and 8D depict top and side views, respectively, of nascent spotsize converter **600** after the tapering of core layer **610.** In FIG. 8C, iso-height lines **828** indicate height changes of approximately 20 nm.

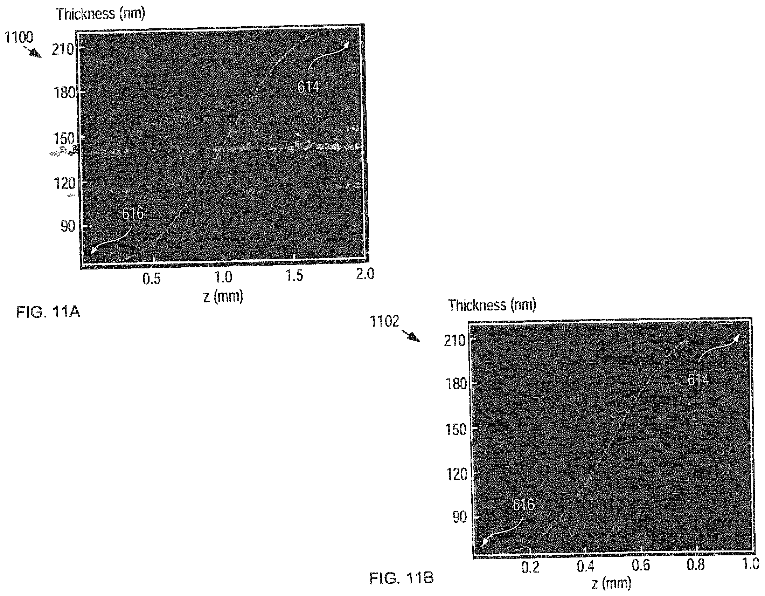

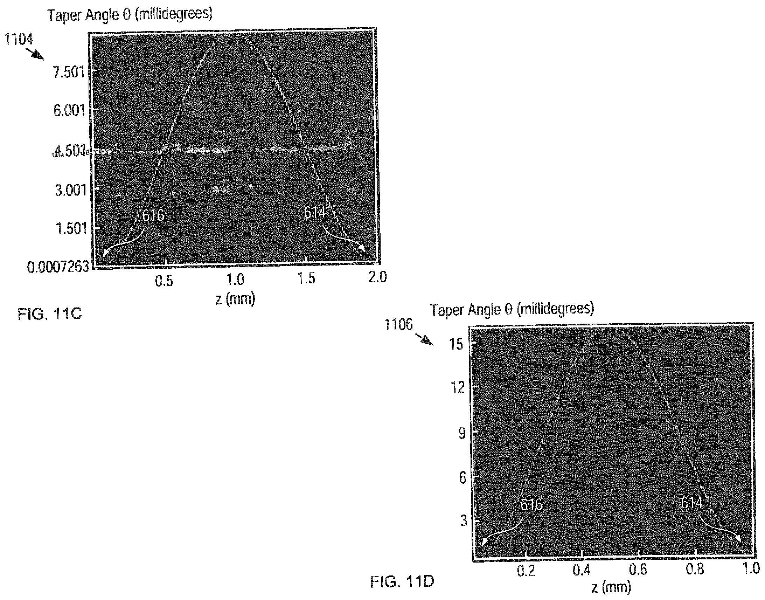

FIGS. 11A-B depict plots of the thickness of exemplary core layers **610** as a function of distance, z, for taper regions having lengths of 2 mm and 1 mm, respectively. Plots **1100** and **1102** show the thickness of core layer **610** from second end **616** to first end **614,** for a core layer having an initial thickness, **h3,** of 220 nm and a final thickness, **h4,** in low-contrast region **602** of approximately 65 nm.

FIGS. 11C-D depict plots of the taper angle, $\theta$, of exemplary core layers **610** as a function of distance, z, for taper regions having lengths of 2 mm and 1 mm, respectively. Plots **1104** and **1106** show the instantaneous angle of the top surface of core layer **610** from second end **616** to first end **614,** for a core layer having an initial thickness, **h3,** of 220 nm and a final thickness, **h4,** in low-contrast region **602** of approximately 65 nm.

At operation **706,** accelerator layer **802** and mask layer **804** are stripped from nascent spotsize converter **600.**

At operation **707,** core layer **610** is patterned to define core **618.** In high-contrast region **606,** core **618** has width **w1,** which is within the range of a few nanometers to a few tens of microns and typically about 1 micron. In low-contrast region **602,** core **618** has width **w2,** which is also within the range of a few nanometers to a few tens of microns. In the illustrative embodiment, **w1** is approximately 1 micron and **w2** is approximately 65 nm. In transition region **604,** the width of core **618** is a function of z. In some embodiments, the width function **w(z)** is determined in analogous fashion to that described above and with respect to FIG. 9. Typically, **w(z)** changes monotonically along transition region **604.** In the illustrative embodiment, wherein transition region **604** has a thickness that approximates a sine-bend shape, **w(z)** is defined as:

$$ w(z) = \frac{O_{sine}}{L_{sine}} z - \frac{O_{sine}}{2\pi} \sin\left(\frac{2\pi}{L_{sine}} z\right), \qquad (5) $$

where $Lsine$ is the length, **L2,** of transition region **604** along the z-direction, and $O_{sine}=$**(w1-w2)/2.**

It will be clear to one skilled in the art, after reading this Specification, how to define a suitable function, **w(z),** based on the application for which spotsize converter **600** is intended. In some embodiments, core **618** has the same width in all of regions **602, 604,** and **606.**

In some embodiments, core **618** comprises a composite core having an inner core of a first material (*e.g.,* silicon dioxide) surrounded by an outer core of a second material (*e.g.,* silicon nitride). In some embodiments, core **618** comprises a composite core having a central core of a first material (*e.g.,* silicon dioxide) that is disposed between lower and upper core layers comprising a second material (*e.g.,* silicon nitride). A composite core is characterized by an effective refractive index that is determined by the materials used as well as the geometry of the core design. As a result, these factors also affect the effective refractive-index contrast of a composite-core waveguide, which is also affected by other factors, such as core and cladding dimensions, core and cladding materials, and the like.

In some embodiments, the transition region wherein the lateral dimension of core **618** changes is not aligned along the z-direction with the transition region wherein the thickness of core **618** changes. In other words, in some embodiments, spotsize converter **600** includes two separate transition regions - one for the thickness of core **618** and another for the lateral dimension of core **618.**

At operation **708,** upper cladding **612** is formed on core layer **610** in conventional fashion to complete the fabrication of spotsize converter **600.** Upper cladding **612** is normally a layer of silicon oxide (*e.g.,* silicon dioxide, silicon monoxide, *etc.*) formed via LPCVD deposition using a precursor gas such as tetraethyl orthosilicate (TEOS), which results in a conformal oxide layer.

Upper cladding **612** typically has a thickness within the range of approximately 1 micron to approximately 30 microns. In the illustrative embodiment, upper cladding has a thickness of approximately 15 microns. In some embodiments, upper cladding **612** has a thickness that is less than 1 micron. In some embodiments, upper cladding **612** is not present.

Although the illustrative embodiment includes a waveguide having lower and upper cladding layers that have substantially uniform thickness throughout, it will be clear to one skilled in the art, after reading this Specification, how to specify, make, and use alternative embodiments of the present invention wherein at least one of the upper and lower cladding layers is tapered in similar fashion to the manner in which core layer **610** is tapered, as described above, such that one or both of these cladding layers has a thickness and/or width that changes along the propagation direction in at least a portion of a waveguide.

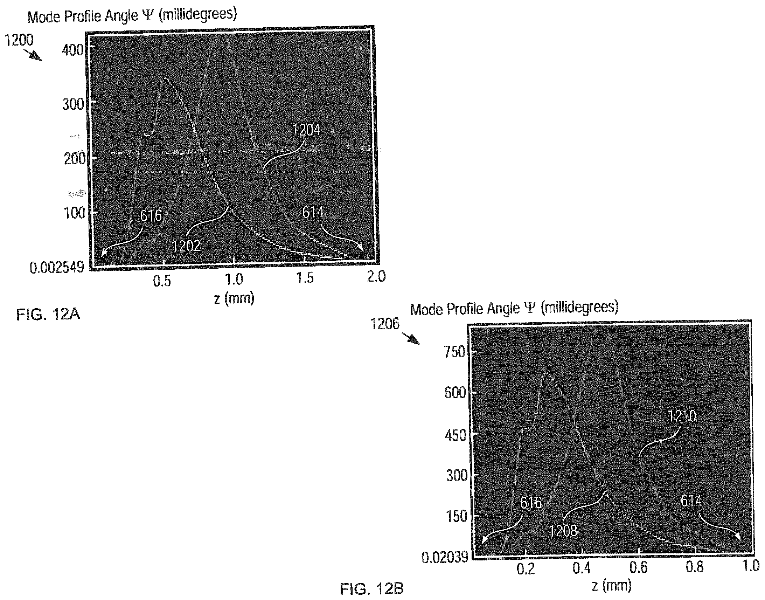

FIGS. 12A and 12B depict plots of a mode profile induced by exemplary sinusoidal taper regions having lengths of approximately 2 mm and 1 mm, respectively.

Plot **1200** shows the mode profile angle, Ψ, along transition region **604** from second end **616** to first end **614,** where the length of the transition region, **L2,** is 2 mm. Traces **1202** and **1204** show the mode profile angle for TE and TM polarized light, respectively, at 1550 nm.

Plot **1206** shows the mode profile angle, Ψ, along transition region **604** from second end **616** to first end **614,** where the length of the transition region, **L2,** is 1 mm. Traces **1208** and **1210** show the mode profile angle for TE and TM polarized light, respectively, at 1550 nm.

Although the illustrative embodiment comprises a spotsize converter having a transition region including a core layer having a sinusoidal thickness profile, it will be clear to one skilled in the art, after reading this Specification, how to specify, make, and use spotsize converters that include a core layer having any suitable substantially changing vertical profile, including linear, piecewise linear, non-linear, curved, irregular, monotonically changing, non-monotonically changing, exponential, and the like.

In some embodiments, core layer **610** is formed such that it has a taper angle that changes in substantially constant fashion along transition region **604** (neglecting changes that might occur in the immediate vicinity of first end **614** or second end **616**). Such a thickness profile affords these embodiments with additional advantages, such as the ability to distribute vertical bending loss (induced by peaks in the taper angle) evenly along the length of the transition region.

In some embodiments, core layer **610** is formed as part of a waveguide structure such that the value of the mode-profile-angle, Ψ, of the waveguide remains substantially constant along the length of transition region **604.** In some of these embodiments, the thickness of core layer **610** increases substantially exponentially along the length of transition region **604.**

It is to be understood that the disclosure teaches just one example of the illustrative embodiment and that many variations of the invention can easily be devised by those skilled in the art after reading this disclosure and that the scope of the present invention is to be determined by the following claims.

## Claims

1. A method comprising:

   providing a substrate (608) having a first region (602), second region (606), and third region (604) that is between the first region and second region, wherein the third region abuts the first region at a first point (616) along a first axis (z), and wherein the third region abuts the second region at a second point (614) along the first axis; and providing a first layer (610) of a first material disposed on the substrate, wherein the first layer has a first thickness (h4) in the first region and a second thickness (h3) in the second region, and wherein the thickness (h(z)) of the first layer in the third region changes in non-linear fashion from the first thickness at the first point to the second thickness at the second point, and wherein the first layer is provided by operations comprising:

   (i) forming the first layer with a first surface (806) and a thickness equal to the second thickness;
   (ii) forming an accelerator layer (802) on the first surface, the layer comprising a second material and a second surface (808);
   (iii) forming a mask layer (804) on the second surface, the mask layer defining an opening (810) having a first side (816) and second side (818) that define a shaped region having a first width Δ(z) that increases monotonically and non-linearly between the first point and second point, wherein the shape of each of the first side and second side is **characterized by** an etch-front angle function (Φ(z)) that is based on a first desired thickness profile (h(z)) for the first layer in the third region; and
   (iv) etching the first layer (610) and the accelerator layer (802) in a first etchant (210) for a first time period (t1), the first etchant being selected such that it etches the second material at a faster rate than the first material, wherein the first time period is selected based on the etch rate of the first material, the first thickness (h4), the second thickness (h3), and the distance (L2) between the first point and the second point.

2. The method of claim 1 wherein the first layer (610) and accelerator layer (802) are etched such that the accelerator layer is laterally etched via the first etchant from the first point (616) to the second point (614) and such that the first layer is exposed to the first etchant at the first point for the first time period and such that the first layer is substantially unexposed to the first etchant at the second point.

3. The method of claim 1 further comprising:

(v) providing a second layer (608) comprising a third material having a refractive index that is lower than the refractive index of the first material, the first layer being disposed on the second layer; and
(vi) providing a third layer (612) comprising a fourth material having a refractive index that is lower than the refractive index of the first material, wherein the third layer is disposed on the first layer;

wherein the first layer, second layer, and third layer collectively define a surface waveguide (600) that has a first mode-field profile for a light signal in the first region (602) and a second mode-field profile for the light signal in the second region (606), and wherein the mode-field profile changes in non-linear fashion from the first mode-field profile to the second mode-field profile along the length of the third region (604).

4. The method of claim 3 wherein the mask layer is provided by operations comprising:

(a) determining the first mode-field profile and the second mode-field profile;
(b) estimate the first desired thickness profile (h(z)) for the first layer (610) in the third region (604);
(c) performing a spline interpolation between the first mode-field profile and the second mode-field profile, the spline interpolation being based on the estimated desired thickness profile;
(d) determining a mode-profile-angle function ($\Psi(z)$) based on the spline interpolation;
(e) determining the taper-angle function ($\theta(z)$) based on the mode-profile-angle function; and
(f) determining the etch-front-angle function ($\Phi(z)$) based on the taper-angle function.

5. The method of claim 1 further comprising:

(v) providing a second layer (608) comprising a second material, the first layer being disposed on the second layer; and
(vi) providing a third layer (612) comprising a third material, wherein the third layer is disposed on the first layer;

wherein the first layer, second layer, and third layer collectively define a surface waveguide (600), and wherein the surface waveguide has a first mode profile for a light signal in the first region and a second mode profile for the light signal in the second region, and further wherein the mode profile transitions adiabatically between the first mode profile and the second mode profile along the length of the third region.

6. The method of claim 5, wherein the surface waveguide (600) is **characterized by** a first effective refractive-index contrast in the first region (602) and a second effective refractive-index contrast in the second region (606), and wherein the effective refractive-index contrast changes between the first effective refractive-index contrast and the second effective refractive-index contrast along the length of the third region (604).

**Patentansprüche**

1. Verfahren, das Folgendes umfasst:

Bereitstellen eines Substrats (608) mit einer ersten Region (602), einer zweiten Region (606) und einer dritten Region (604), die zwischen der ersten Region und der zweiten Region liegt, wobei die dritte Region an einer ersten Stelle (616) entlang einer ersten Achse (z) an der zweiten Region anstößt und wobei die dritte Region an einer zweiten Stelle (614) entlang der ersten Achse an der zweiten Region anstößt; und
Bereitstellen einer ersten Schicht (610) eines auf dem Substrat angeordneten ersten Materials, wobei die erste Schicht in der ersten Region eine erste Dicke (h4) und in der zweiten Region eine zweite Dicke (h3) aufweist, und wobei sich die Dicke (h(z)) der ersten Schicht in der dritten Region auf nichtlineare Weise von der ersten Dicke an der ersten Stelle zu der zweiten Dicke an der zweiten Stelle ändert, und wobei die erste Schicht durch Vorgänge bereitgestellt wird, die Folgendes umfassen:

(i) Bilden der ersten Schicht mit einer ersten Oberfläche (806) und einer Dicke, die gleich der zweiten Dicke ist;

(ii) Bilden einer Beschleunigerschicht (802) auf der ersten Oberfläche, wobei die Schicht ein zweites Material und eine zweite Oberfläche (808) umfasst;

(iii) Bilden einer Abdeckschicht (804) auf der zweiten Oberfläche, wobei die Abdeckschicht eine Öffnung (810) definiert, die eine erste Seite (816) und eine zweite Seite (818) aufweist, die eine geformte Region definieren, die eine erste Breite ∆(z) aufweist, die monoton und nichtlinear zwischen der ersten Stelle und der zweiten Stelle zunimmt, wobei die Form der ersten Seite und der zweiten Seite jeweils von einer Ätzfront-Winkelfunktion (Φ(z)) gekennzeichnet ist, die auf einem ersten gewünschten Dickenprofil (h(z)) für die erste Schicht in der dritten Region basiert; und

(iv) Ätzen der ersten Schicht (610) und der Beschleunigerschicht (802) in einem ersten Ätzmittel (210) während eines ersten Zeitraums (t1), wobei das erste Ätzmittel derart ausgewählt wird, dass es das zweite Material mit einer höheren Geschwindigkeit ätzt als das erste Material, wobei der erste Zeitraum basierend auf der Ätzgeschwindigkeit des ersten Materials, der ersten Dicke (h4), der zweiten Dicke (h3) und dem Abstand (L2) zwischen der ersten Stelle und der zweiten Stelle ausgewählt wird.

2. Verfahren nach Anspruch 1, wobei die erste Schicht (610) und die Beschleunigerschicht (802) derart geätzt werden, dass die Beschleunigerschicht mittels des ersten Ätzmittels in Querrichtung von der ersten Stelle (616) zu der zweiten Stelle (614) geätzt wird, und derart, dass die erste Schicht an der ersten Stelle dem ersten Ätzmittel während des ersten Zeitraums ausgesetzt wird und derart, dass die erste Schicht an der zweiten Stelle dem ersten Ätzmittel im Wesentlichen nicht ausgesetzt wird.

3. Verfahren nach Anspruch 1, das weiter Folgendes umfasst:

(v) Bereitstellen einer zweiten Schicht (608), umfassend ein drittes Material mit einem Brechungsindex, der geringer ist als der Brechungsindex des ersten Materials, wobei die erste Schicht auf der zweiten Schicht angeordnet ist; und

(vi) Bereitstellen einer dritten Schicht (612), umfassend ein viertes Material mit einem Brechungsindex, der geringer ist als der Brechungsindex des ersten Materials, wobei die dritte Schicht auf der ersten Schicht angeordnet ist;

wobei die erste Schicht, die zweite Schicht und die dritte Schicht kollektiv einen Oberflächenwellenleiter (600) definieren, der in der ersten Region (602) ein erstes Modenfeldprofil für ein Lichtsignal und in der zweiten Region (606) ein zweites Modenfeldprofil für das Lichtsignal aufweist, und wobei sich das Modenfeldprofil auf nichtlineare Weise entlang der Länge der dritten Region (604) von dem ersten Modenfeldprofil zu dem zweiten Modenfeldprofil ändert.

4. Verfahren nach Anspruch 3, wobei die Abdeckschicht durch Vorgänge bereitgestellt wird, die Folgendes umfassen:

(a) Bestimmen des ersten Modenfeldprofils und des zweiten Modenfeldprofils;
(b) Schätzen des ersten gewünschten Dickenprofils (h(z)) für die erste Schicht (610) in der dritten Region (604);
(c) Ausführen einer Spline-Interpolation zwischen dem ersten Modenfeldprofil und dem zweiten Modenfeldprofil, wobei die Spline-Interpolation auf dem geschätzten gewünschten Dickenprofil basiert;
(d) Bestimmen einer Modenprofil-Winkelfunktion (ψ(z)) basierend auf der Spline-Interpolation;
(e) Bestimmen der Verjüngungswinkelfunktion (θ(z)) basierend auf der Modenprofil-Winkelfunktion; und
(f) Bestimmen der Ätzfront-Winkelfunktion (Φ(z)) basierend auf der Verjüngungswinkelfunktion.

5. Verfahren nach Anspruch 1, das weiter Folgendes umfasst:

(v) Bereitstellen einer zweiten Schicht (608), umfassend ein zweites Material, wobei die erste Schicht auf der zweiten Schicht angeordnet ist; und

(vi) Bereitstellen einer dritten Schicht (612), umfassend ein drittes Material, wobei die dritte Schicht auf der ersten Schicht angeordnet ist;

wobei die erste Schicht, die zweite Schicht und die dritte Schicht kollektiv einen Oberflächenwellenleiter (600) definieren, und wobei der Oberflächenwellenleiter in der ersten Region ein erstes Modenprofil für ein Lichtsignal und in der zweiten Region ein zweites Modenprofil für das Lichtsignal aufweist, und wobei weiter das Modenprofil entlang der Länge der dritten Region adiabatisch zwischen dem ersten Modenprofil und dem zweiten Modenprofil übergeht.

6. Verfahren nach Anspruch 5, wobei der Oberflächenwellenleiter (600) durch einen ersten Kontrast der effektiven Brechungsindizes in der ersten Region (602) und einen zweiten Kontrast der effektiven Brechungsindizes in der zweiten Region (606) gekennzeichnet ist, und wobei sich der Kontrast der effektiven Brechungsindizes entlang der Länge der dritten Region (604) zwischen dem ersten Kontrast der effektiven Brechungsindizes und dem zweiten Kontrast der effektiven Brechungsindizes ändert.

**Revendications**

1. Un procédé consistant à :

fournir un substrat (608) ayant une première région (602), une deuxième région (606), et une troisième région (604) qui est entre la première région et deuxième région, dans lequel la troisième région aboute la première région au niveau d'un premier point (616) le long d'un premier axe (z), et dans lequel la troisième région aboute la deuxième région au niveau d'un deuxième point (614) le long du premier axe ; et

fournir une première couche (610) d'un premier matériau disposé sur le substrat, dans lequel la première couche a une première épaisseur (h4) dans la première région et une deuxième épaisseur (h3) dans la deuxième région, et dans lequel l'épaisseur (h(z)) de la première couche dans la troisième région change de façon non linéaire de la première épaisseur au niveau du premier point à la deuxième épaisseur au niveau du deuxième point, et dans lequel la première couche est fournie par des opérations consistant à :

(i) former la première couche avec une première surface (806) et une épaisseur égale à la deuxième épaisseur ;

(ii) former une couche d'accélérateur (802) sur la première surface, la couche comprenant un deuxième matériau et une deuxième surface (808) ;

(iii) former une couche de masque (804) sur la deuxième surface, la couche de masque définissant une ouverture (810) ayant un premier côté (816) et un deuxième côté (818) qui définissent une région d'une forme ayant une première largeur $\Delta(z)$ qui augmente de manière monotone et non linéairement entre le premier point et le deuxième point, dans lequel la forme de chacun des premier et deuxième côtés est **caractérisée par** une fonction angle avant-gravure ($\Phi(z)$) qui est basée sur un premier profil d'épaisseur souhaité (h(z)) pour la première couche dans la troisième région ; et

(iv) graver la première couche (610) et la couche d'accélérateur (802) dans un premier agent de gravure (210) pour une première période de temps (t1), le premier agent de gravure étant sélectionné de telle sorte qu'il grave le deuxième matériau à une vitesse plus élevée que le premier matériau, dans lequel la première période de temps est sélectionnée sur la base de la vitesse de gravure du premier matériau, la première épaisseur (h4), la deuxième épaisseur (h3) et la distance (L2) entre le premier point et le deuxième point.

2. Le procédé selon la revendication 1 dans lequel la première couche (610) et la couche d'accélérateur (802) sont gravées de telle sorte que la couche d'accélérateur est gravée latéralement via le premier agent de gravure depuis le premier point (616) vers le deuxième point (614) et de telle sorte que la première couche est exposée au premier agent de gravure au niveau du premier point pour la première période de temps et de telle sorte que la première couche n'est pas sensiblement exposée au premier agent de gravure au niveau du deuxième point.

3. Le procédé selon la revendication 1 consistant en outre à :

(v) fournir une deuxième couche (608) comprenant un troisième matériau ayant un indice de réfraction qui est plus bas que l'indice de réfraction du premier matériau, la première couche étant disposée sur la deuxième couche ; et

(vi) fournir une troisième couche (612) comprenant un quatrième matériau ayant un indice de réfraction qui est plus bas que l'indice de réfraction du premier matériau, dans lequel la troisième couche est disposée sur la première couche ;

dans lequel la première couche, la deuxième couche et la troisième couche définissent collectivement un guide d'ondes de surface (600) qui a un premier profil de champ-mode pour un signal lumineux dans la première région (602) et un deuxième profil de champ-mode pour le signal lumineux dans la deuxième région (606), et dans lequel le profil de champ-mode change de façon non linéaire du premier profil de champ-mode au deuxième profil de champ-mode le long de la longueur de la troisième région (604).

4. Le procédé selon la revendication 3 dans lequel la couche de masque est fourni par des opérations consistant à :

(a) déterminer le premier profil de champ-mode et le deuxième profil de champ-mode ;
(b) évaluer le premier profil d'épaisseur souhaité (h(z)) pour la première couche (610) dans la troisième région (604) ;
(c) effectuer une interpolation de fonction spline entre le premier profil de champ-mode et le deuxième profil de champ-mode, l'interpolation de fonction spline étant basée sur le profil d'épaisseur souhaité évalué ;
(d) déterminer une fonction angle-profil-mode ($\Psi(z)$) sur la base de l'interpolation de fonction spline ;
(e) déterminer la fonction angle-conicité ($\theta(z)$) sur la base de la fonction angle-profil-mode ; et
(f) déterminer la fonction angle-avant-gravure ($\Phi(z)$) sur la base de la fonction angle-conicité.

5. Le procédé selon la revendication 1 consistant en outre à :

(v) fournir une deuxième couche (608) comprenant un deuxième matériau, la première couche étant disposée sur la deuxième couche ; et
(vi) fournir une troisième couche (612) comprenant un troisième matériau, dans lequel la troisième couche est disposée sur la première couche ;

dans lequel la première couche, la deuxième couche et la troisième couche définissent collectivement un guide d'ondes de surface (600), et dans lequel le guide d'ondes de surface a un premier profil de mode pour un signal lumineux dans la première région et un deuxième profil de mode pour le signal lumineux dans la deuxième région, et en outre dans lequel le profil de mode effectue une transition adiabatique entre le premier profil de mode et le deuxième profil de mode le long de la longueur de la troisième région.

6. Le procédé selon la revendication 5, dans lequel le guide d'ondes de surface (600) est **caractérisé par** un premier contraste d'indice de réfraction efficace dans la première région (602) et un deuxième contraste d'indice de réfraction efficace dans la deuxième région (606), et dans lequel le contraste d'indice de réfraction efficace change entre le premier contraste d'indice de réfraction efficace et le deuxième contraste d'indice de réfraction efficace le long de la longueur de la troisième région (604).

FIG. 1

Side View

FIG. 2A

FIG. 2B

FIG. 2C

FIG. 3

300

| Form accelerator layer 202 on surface 206 of layer 110 | 301 |

| Form mask layer 204 on surface 208 of accelerator layer 202 | 302 |

| Expose substrate region 100 to etchant 210 at time t(0) | 303 |

| Stop lateral etch front 212 of etchant 210 at time t(1) | 304 |

FIG. 4A

FIG. 4B

EP 2 942 652 B1

FIG. 5A

FIG. 5B

FIG. 5C

FIG. 6A

FIG. 6B

FIG. 7

700

| | |
|---|---|
| Form core layer 610 on lower cladding 608 | 701 |
| Form accelerator layer 802 on surface 806 of core layer 610 | 702 |
| Form mask layer 804 on surface 808 of accelerator layer 802 | 703 |
| Expose substrate region 100 to etchant 210 at time t(0) | 704 |
| Stop lateral etch front 212 of etchant 210 at time t(1) | 705 |
| Remove accelerator layer 802 and mask layer 804 | 706 |
| Define the lateral dimensions of core 618 | 707 |
| Form upper cladding 612 | 708 |

EP 2 942 652 B1

**FIG. 8A**

600

602 | 604 | 606

Opening 810

816

Φ(z)

822

Shaped Region 812

826

Δ(z)

Field Region 814

a · · · a

824

820

818

x

z=0

z

610

z

**FIG. 8B**

600

Accelerator Layer 802

808

Mask Layer 804

Core Layer 610

h3

Lower Cladding 608

806

y

z

view through line a-a

FIG. 8C

FIG. 8D

FIG. 9

703

From Operation 702

| Determine a first mode-field profile in low-contrast region 602 | 901 |

| Determine a second mode-field profile in high-contrast region 606 | 902 |

| Estimate a desired thickness profile for core layer 610 in transition region 604 | 903 |

| Perform a spline interpolation between the first and second mode-field profiles | 904 |

| Determine the mode-profile-taper-angle function $\Psi(z)$ based on the spline interpolation | 905 |

| Determine the taper-angle-function $\Phi(z)$ based on the mode-profile-taper- angle function $\Psi(z)$ | 906 |

| Determine the etch-front-angle function $\theta(z)$ based on the taper-angle function $\Phi(z)$ | 907 |

| Define opening 816 having sides 816 and 818 based on taper angle $\theta(z)$ | 908 |

To Operation 704

FIG. 10A

FIG. 10B

26

EP 2 942 652 B1

FIG. 11A

FIG. 11B

Taper Angle θ (millidegrees)

1104

FIG. 11C

Taper Angle θ (millidegrees)

1106

FIG. 11D

EP 2 942 652 B1

FIG. 12A

FIG. 12B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 8718432 B
- EP 0546961 A
- EP 2720073 A
- US 2002191916 A
- WO 2009051562 A
- US 4865407 A
- US 2008264107 A
- JP 3112115 B
- US 451957 A

### Non-patent literature cited in the description

- Optical spotsize converter using narrow laterally tapered surface waveguide for Planar Lightwave Circuits. *J. Lightwave Tech.,* 2004, vol. 22, 833-839
- Spotsize converters for rib-type silicon photonic wire surface waveguides. *Proceedings of the 5th International Conference on Group IV Photonics,* 200-202
- Low loss shallow-ridge silicon surface waveguides. *Optics Express,* 2010, vol. 18 (14), 14474-14479
- Spotsize converter of Photonic Crystal Surface waveguide. *NTT Technical Review,* 2004, vol. 2, 36-47
- Low-Loss Compact Arrayed Surface waveguide Grating with Spot-size Converter Fabricated by a Shadow-Mask Etching Technique. *Electronics and Telecommunications Research Institute (ETRI) Journal,* 2005, vol. 27 (1), 89-94